# EUROPEAN PATENT SPECIFICATION

(11) **EP 4 156 657 B1**
(45) Date of publication and mention of the grant of the patent: **18.11.2026**
(21) Application number: 21832219.6
(22) Date of filing: 29.04.2021
(51) Int. Cl.: H04M 1/02, G06F 1/16, H04M 1/725

(54) **ELECTRONIC DEVICE**
ELEKTRONISCHE VORRICHTUNG
DISPOSITIF ÉLECTRONIQUE

(30) Priority: 28.06.2020 CN 202010599851
(43) Date of publication of application: 29.03.2023
(73) Proprietor: GUANGDONG OPPO MOBILE TELECOMMUNICATIONS CORP., LTD., Dongguan Guangdong 523860 (CN)
(72) Inventor: YIN, Bin, Dongguan, Guangdong 523860 (CN); CHEN, Yongliang, Dongguan, Guangdong 523860 (CN)
(74) Representative: Mewburn Ellis LLP
(86) International application number: PCT/CN2021/091023
(87) International publication number: WO 2022/001345

(56) References cited:
- WO-A1-2019/107909
- CN-A- 102 902 308
- CN-A- 106 971 673
- CN-A- 110 246 422
- CN-A- 110 246 422
- US-A1- 2014 380 186
- US-A1- 2018 188 778
- US-A1- 2020 363 841
- US-A1- 2022 130 287

## Description

### TECHNICAL FIELD

This disclosure relates to the field of electronic technology, and in particular to an electronic device.

### BACKGROUND

With development of electronic technology, display devices of electronic devices such as smart phones are becoming more and more intelligent. A display device of an electronic device can display a picture through a display screen of the display device.

A flexible display screen has attracted much attention due to folding and bending characteristics of the flexible display screen. By driving the flexible display screen to be extended outside the electronic device or retracted inside the electronic device, a screen display region of the electronic device can be adjusted, while the flexible display screen is easy to be damaged during movement.

CN 110246422A provides a flexible display device using a flexible display panel equipped with a movable case assembly. The moving case assembly can move and drive the flexible display panel to form a display device with adjustable panel dimensions. When two cases constituting the case assembly slide relatively, a dimension of a front display area of the flexible display device change. Displacement of the sliding flexible display device may compensate the dimensional change of the flexible display panel on a surface of the flexible display device.

WO 2019/107909 A1 discloses an electronic device including a flexible display having an expandable display area. The disclosed electronic device may include: a housing including a first cover disposed to face a first direction, a second cover disposed to face a second direction opposite to the first direction, and a side member enclosing at least part of a space between the first and second covers; a slider to be inserted or withdrawn by being disposed to at least part of an area of the first cover of the housing; a flexible display disposed in the slider such that at least part thereof is exposed, and disposed to allow a display area to be expanded according to the withdrawing of the slider and allow the expanded display area to be hidden inside the housing; and a support body mounted closely in contact on a bottom face of the flexible display, supporting the expanded display area as a prop when the slider is withdrawn, and disposed to be housed inside the housing together with the expanded display area when the slider is inserted.

US 2018/188778A1 discloses a display expansion type mobile terminal with a sliding motion. The display expansion type mobile terminal includes: a flexible display device; a fixed end frame to which the first front end is fixed; a via member provided independently of the fixed end frame; an extension frame which extends from the fixed end frame to a position adjacent to the via member in the predetermined display size adjustment direction A; a movable member which is spaced apart from the via member by an interval corresponding to a length of the extension frame; and a connection member.

### SUMMARY

Aspects of the invention are set out in the appended claims.

An electronic device is provided in implementations of the present disclosure, which can reduce a damage to a flexible screen assembly during movement.

### BRIEF DESCRIPTION OF THE DRAWINGS

FIG. 1 is a first schematic structural diagram of an electronic device provided in implementations of the present disclosure.
FIG. 2 is a second schematic structural diagram of an electronic device provided in implementations of the present disclosure.
FIG. 3 is a schematic cross-sectional structural diagram of the electronic device illustrated in FIG. 1 taken in direction P1-P1.
FIG. 4 is a schematic cross-sectional diagram of the electronic device of FIG. 2 taken in direction P2-P2.
FIG. 5 is a second schematic structural diagram of a flexible screen assembly, a first driving member, and a second driving member in the electronic device illustrated in FIG. 3.
FIG. 6 is a third schematic structural diagram of a flexible screen assembly, a first driving member, and a second driving member in the electronic device illustrated in FIG. 3.
FIG. 7 is a schematic structural diagram of a first carrier and a flexible screen assembly in the electronic device illustrated in FIG. 1.
FIG. 8 is a schematic structural diagram of the electronic device illustrated in FIG. 4 with a second driving member displaced.
FIG. 9 is an exploded schematic structural diagram of a second carrier and a flexible screen assembly in the electronic device illustrated in FIG. 3.
FIG. 10 is an enlarged schematic structural diagram of the second carrier and the flexible screen assembly at region A in FIG. 9.
FIG. 11 is a partial schematic structural diagram of an electronic device provided in implementations of the present disclosure.
FIG. 12 is a schematic structural diagram of the electronic device illustrated in FIG. 11 taken in direction P3-P3.
FIG. 13 is an enlarged schematic structural diagram of the electronic device at region B in FIG. 12.
FIG. 14 is a schematic structural diagram of the electronic device illustrated in FIG. 12 with a second driving member displaced.
FIG. 15 is an enlarged schematic structural diagram of the electronic device at region C in FIG. 14.
FIG. 16 is a schematic structural diagram of a first bracket, a second driving member, and an elastic member in the second carrier and the flexible screen assembly illustrated in FIG. 9.
FIG. 17 is a third schematic structural diagram of an electronic device provided in implementations of the present disclosure.
FIG. 18 is a partial schematic structural diagram of an electronic device provided in implementations of the present disclosure.
FIG. 19 is a fourth schematic structural diagram of an electronic device provided in implementations of the present disclosure.
FIG. 20 is a fifth schematic structural diagram of an electronic device provided in implementations of the present disclosure.

### DETAILED DESCRIPTION

An electronic device is provided in implementations of the present disclosure. The electronic device includes a first carrier, a second carrier, a first driving member, a second driving member, and a flexible screen assembly. The second carrier is movable relative to the first carrier to make the electronic device extend. The first driving member and the second driving member each are disposed at the second carrier. The flexible screen assembly has a first end and a second end each connected with the first carrier. The flexible screen assembly is wrapped around the first driving member and the second driving member. A part of the flexible screen assembly located at the first driving member forms a first turn, and a part of the flexible screen assembly located at the first driving member forms a second turn. When the second carrier moves relative to the first carrier, the flexible screen assembly is configured to move relative to the first driving member and the second driving member. During extension of the electronic device, a part of the flexible screen assembly from the first end to the first turn becomes longer, and a part of the flexible screen assembly from the second turn to the second end becomes shorter.

In implementations of the present disclosure, the flexible screen assembly is wrapped around the first driving member and the second driving member, and two ends of the flexible screen assembly are connected with the first carrier, such that a damage to the flexible screen assembly due to forces concentrated at a certain position of the flexible screen assembly can be avoided. In addition, when the first carrier and the second carrier move relative to each other, the flexible screen assembly is driven to move relative to the first driving member and the second driving member, which can improve consistency between relative movement of the first carrier and the second carrier and movement of the flexible screen assembly relative to the first driving member and the second driving member, thereby reducing a damage to the flexible screen assembly during movement.

In an optional implementation of the present disclosure, the part of the flexible screen assembly from the first end to the first turn is parallel to the part of the flexible screen assembly from the second end to the second turn.

In an optional implementation of the present disclosure, the flexible screen assembly is wrapped around the first driving member clockwise and wrapped around the second driving member clockwise; or the flexible screen assembly is wrapped around the first driving member clockwise and wrapped around the second driving member counterclockwise.

In an optional implementation of the present disclosure, the first driving member and the second driving member each are rotatably connected with the second carrier, and when the flexible screen assembly moves relative to the first driving member and the second driving member, the flexible screen assembly is configured to drive the first driving member and the second driving member each to rotate relative to the second carrier.

In an optional implementation of the present disclosure, the part of the flexible screen assembly from the first end to the first turn is not parallel to the part of the flexible screen assembly from the second end to the second turn.

In an optional implementation of the present disclosure, the second end of the flexible screen assembly is connected with the first carrier through an elastic mechanism, and the elastic mechanism is elastically deformed to make a distance between the second end of the flexible screen assembly and the first carrier adjustable.

In an optional implementation of the present disclosure, the first driving member has a diameter larger than the second driving member.

In an optional implementation of the present disclosure, the flexible screen assembly includes a flexible display module and a driving belt. The flexible display module has one end connected with the first carrier, the flexible display module is wrapped around the first driving member, the flexible display module has another end connected with one end of the driving belt, another end of the driving belt is connected with the first carrier, and the driving belt is wrapped around the second driving belt.

In an optional implementation of the present disclosure, the flexible screen assembly includes a flexible display module, a support member, and a driving belt. The flexible display module covers the support member. The support member is wrapped around the first driving member. The support member has one end connected with the first carrier, the support member has another end connected with one end of the driving belt, another end of the driving belt is connected with the first carrier, and the driving belt is wrapped around the second driving member.

In implementations of the present disclosure, the electronic device further includes an adjustment mechanism. The adjustment mechanism is configured to finely adjust a relative distance between the first driving member and the second driving member when the flexible screen assembly is slack, to make the flexible screen assembly in a tensioned state.

In an optional implementation of the present disclosure, the second driving member is movably connected with the second carrier through a first bracket. The adjustment mechanism includes a first elastic member. The first elastic member has one end abutting against the first bracket and another end abutting against the second carrier. The first elastic member is in a compressed state to apply an elastic force to the first bracket. When the flexible screen assembly is slack, the first elastic member is elastically deformed to drive the second driving member to move in a direction away from the first driving member.

In an optional implementation of the present disclosure, the second carrier is provided with a protrusion, the first bracket defines a through hole, the protrusion passes through the through hole, the through hole has a size larger than the protrusion, and a first movement space is defined between the first bracket and the protrusion in a movement direction of the flexible screen assembly.

In an optional implementation of the present disclosure, the first movement space is smaller than a maximum deformation amount of the first elastic member to keep the first elastic member in the compressed state.

In an optional implementation of the present disclosure, the second carrier defines an accommodating groove. The first bracket has a straight portion and a bending portion. The straight portion is sleeved on the protrusion through the through hole. The bending portion is bendably disposed relative to the straight portion, and the bending portion is located in the accommodating groove. A second movement space is defined between the bending portion and a groove wall of the accommodating groove. The first elastic member is accommodated in the accommodating groove. The first elastic member has one end abutting against the bending portion and another end abutting against the groove wall of the accommodating groove.

In an optional implementation of the present disclosure, the first driving member is movably connected with the second carrier through a second bracket. The adjustment mechanism further includes a second elastic member. The second elastic member has one end abutting against the second bracket and another end abutting against the second carrier. The second elastic member is in the compressed state to apply an elastic force to the second bracket. When the flexible screen assembly is slack, the second elastic member is elastically deformed to drive the first driving member to move in a direction away from the second driving member.

In an optional implementation of the present disclosure, the first driving member is movably connected with the second carrier through a second bracket. The second driving member is movably connected with the second carrier through a first bracket. The adjustment mechanism includes a first elastic member. The first elastic member has one end abutting against the second bracket and another end abutting against the first bracket. The first elastic member is in a compressed state to apply an elastic force to the first bracket and the second bracket. When the flexible screen assembly is slack, the first elastic member is elastically deformed to drive the first driving member to move in a direction away from the second driving member and drive the second driving member to move in a direction away from the second driving member.

In an optional implementation of the present disclosure, the first driving member is disposed at one side of the second carrier, the second driving member is disposed at another side of the second carrier, and said another side of the second carrier is disposed opposite to said one side of the second carrier. The first driving member is movably connected with the second carrier through a second bracket. The second driving member is fixedly connected with the second carrier. The adjustment mechanism includes a first elastic member. The first elastic member has one end abutting against a first bracket and another end abutting against the second carrier. The first elastic member is in a compressed state to apply an elastic force to the second bracket. When the flexible screen assembly is slack, the first elastic member is elastically deformed to drive the first driving member to move in a direction away from the second driving member.

In implementations of the present disclosure, the electronic device further includes a processor and a detecting mechanism. The processor is electrically coupled with the detecting mechanism and the adjustment mechanism respectively. The detecting mechanism is configured to detect a state of the flexible screen assembly. The processor is configured to control the adjustment mechanism to drive the first driving member to move in a direction away from the second driving member, and/or control the second driving member to move in a direction away from the first driving member, to increase a relative distance between the first driving member and the second driving member, when the flexible screen assembly is slack.

Another electronic device is further provided in implementations of the present disclosure. The electronic device includes a first carrier, a second carrier, a first driving member, a second driving member, and a flexible screen assembly. The second carrier and the first carrier are movable relative to each other to make the electronic device extend. The first driving member and the second driving member each are disposed at the second carrier. The flexible screen assembly has a first end and a second end each connected with the first carrier. The flexible screen assembly is wrapped around the first driving member and the second driving member. A projection of a position where the second end of the flexible screen assembly is connected with the first carrier on the first carrier falls between a projection of the first driving member on the first carrier and a projection of the second driving member on the first carrier.

In an optional implementation of the present disclosure, a distance between the projection of the position where the second end of the flexible screen assembly is connected with the first carrier on the first carrier and the projection of the first driving member on the first carrier is less than the distance between the projection of the position where the second end of the flexible screen assembly is connected with the first carrier on the first carrier and the projection of the first driving member on the first carrier.

Technical solutions of implementations of the present disclosure will be described clearly and completely with reference to accompanying drawings in implementations of the present disclosure below. Apparently, implementations described herein are merely some implementations, rather than all implementations, of the present disclosure. Based on implementations of the present disclosure, all other implementations obtained by those of ordinary skill in the art without creative effort shall fall within the protection scope of the present disclosure.

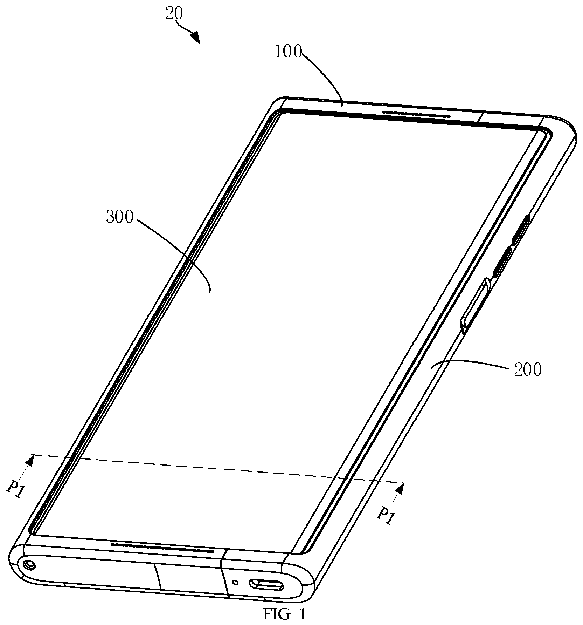

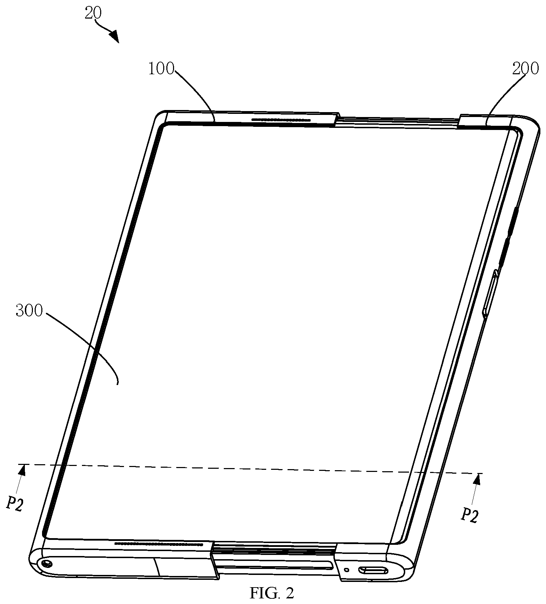

Reference can be made to FIG. 1 to FIG. 2, where FIG. 1 is a first schematic structural diagram of an electronic device provided in implementations of the present disclosure, and FIG. 2 is a second schematic structural diagram of an electronic device provided in implementations of the present disclosure. An electronic device such as an electronic device 20 of FIG. 1 may be a computing device such as a laptop computer, a computer monitor containing an embedded computer, a tablet computer, a cellular telephone, a media player, or other handheld or portable electronic devices, a smaller device (e.g., such as a wrist-watch device, a pendant device, a headphone or earpiece device, a device embedded in eyeglasses or other devices worn on a user's head, or other wearable or miniature devices), a television, a computer display without an embedded computer, a gaming device, a navigation device, an embedded system (e.g., a system, in which an electronic device with a display is mounted, in a kiosk or automobile), a device that implements the functionality of two or more of these devices, or other electronic devices. In an illustrative configuration of FIG. 1, the electronic device 20 is a portable device such as a cellular telephone, media player, tablet computer, wearable device, or other portable computing devices. Other configurations may be used for device 10 if desired. The example of FIG. 1 is merely illustrative.

The electronic device 20 may include a first carrier 100 and a second carrier 200 movable relative to each other, which can be realized by a slidable connection of the first carrier 100 and the second carrier 200. For example, the first carrier 100 defines a sliding groove, and a side edge of the second carrier 200 being located in the sliding groove and able to slide in the sliding groove. An extending state and a retracting state can be switched by relative movement of the first carrier 100 and the second carrier 200. Referring to FIG. 1, the retracting state is a state formed by relative movement of the first carrier 100 and the second carrier 200 in directions close to each other. Referring to FIG. 2, the extending state is a state formed by relative movement of the first carrier 100 and the second carrier 200 in directions away from each other.

It can be understood that in the retracting state, when the first carrier 100 and the second carrier 200 move in the directions away from each other, the second carrier 200 can move from the inside of the first carrier 100 to the outside of the first carrier 100, to switch from the retracting state to the extending state. In the extending state, when the first carrier 100 and the second carrier 200 move in the directions close to each other, the second carrier 200 may move from the outside of the first carrier 100 to the inside of the first carrier 100, to switch from the extending state to the retracting state.

It should be noted that the first carrier 100 and the second carrier 200 can have various extending states, for example, a maximum movement distance between the first carrier 100 and the second carrier 200 in the directions away from each other is H, and the first carrier 100 and the second carrier 200 can move away from each other in the retracting state to form extending states with different distances such as a quarter of H, a half of H, three quarters of H, etc. States in which the distance gradually grows can be defined as a first extending state, a second extending state, a third extending state, and the like in turn.

It should also be noted that when the first carrier 100 and the second carrier 200 are in the first extending state, for example the first carrier 100 and the second carrier 200 move away from each other by a distance of a quarter of H to be in the first extending state, the first carrier 100 and the second carrier 200 can still move away from each other to reach the second extending state, for example the first carrier 100 and the second carrier 200 move away from each other by a distance of a half of H to be in the second extending state.

It can be understood that one or more of extending states of the first carrier 100 and the second carrier 200 in implementations of the present disclosure are illustrative only, and are not intended to limit the extending states of the first carrier 100 and the second carrier 200 of the implementations of the present disclosure.

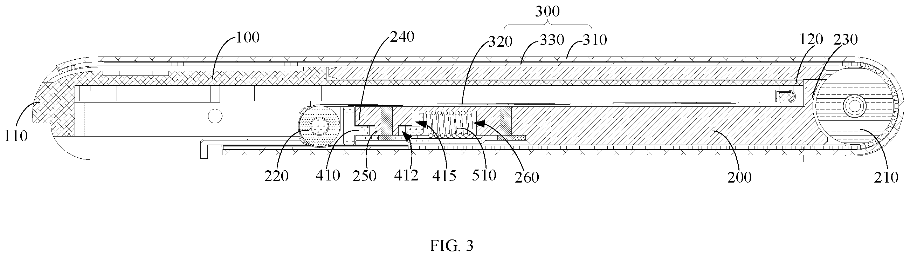

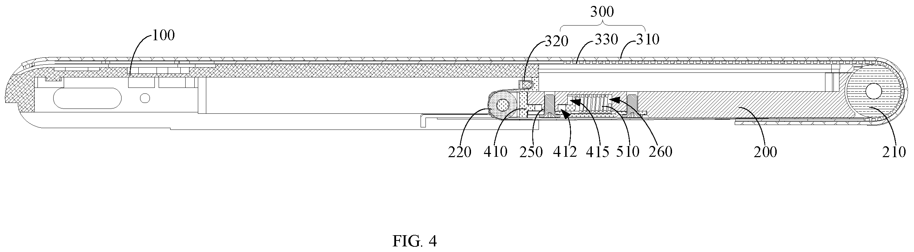

Reference can be made to FIG. 3 and FIG. 4, where FIG. 3 is a schematic cross-sectional structural diagram of the electronic device illustrated in FIG. 1 taken in direction P1-P1, and FIG. 4 is a schematic cross-sectional diagram of the electronic device of FIG. 2 taken in direction P2-P2. The second carrier 200 is connected with a first driving member 210 and a second driving member 220, and the first driving member 210 is spaced apart from the second driving member 220. It should be noted that the first driving member 210 and the second driving member 220 may be directly connected with the second carrier 200, or indirectly connected with the second carrier 200 through other components. The first driving member 210 may be in a regular shape, such as a cylinder or a semi-cylinder, or in an irregular shape, for example one surface of the first driving member 210 may be a circular arc surface, and the other surfaces may be flat surfaces or wavy surfaces. The first driving member 210 may be an additional component independent of the second carrier 200, or a part of the second carrier 200.

The second driving member 220 may have the same structure as the first driving member 210, for example, the first driving member 210 and the second driving member 220 may both have cylindrical structures. The second driving member 220 may also have a different structure from the first driving member 210.

The electronic device 20 further includes a flexible screen assembly 300. The flexible screen assembly 300 has a first end and a second end each connected with the first carrier 100. For example, the first end of the flexible screen assembly 300 may be connected with an external surface of the first carrier 100, and the second end of the flexible screen assembly 300 may be connected with the first carrier 100. A projection of a position where the second end of the flexible screen assembly 300 is connected with the first carrier 100 on the first carrier 100 falls between a projection of the first driving member 210 on the first carrier 100 and a projection of the second driving member 220 on the first carrier 100. For example, the second end of the flexible screen assembly 300 may be connected to an internal surface of the first carrier 100. The external surface of the first carrier 100 refers to a surface that can be seen from the outside of the first carrier 100, and the internal surface of the first carrier 100 refers to a surface that is unable to be seen from the outside of the first carrier 100. In addition, the flexible screen assembly 300 is wound around the first driving member 210 and the second driving member 220.

When the first carrier 100 and the second carrier 200 are in the retracting state, the first carrier 100 and the second carrier 200 are fitted to each other. Here, an accommodation space can be defined between the first carrier 100 and the second carrier 200, and the accommodation space can be used to accommodate other components of the electronic device 20, such as a circuit board, a battery, a camera assembly, etc. A part of the flexible screen assembly 300 is also accommodated in the accommodation space. When the first carrier 100 and the second carrier 200 in the retracting state move away from each other, the first driving member 210 and the second driving member 220 can drive the flexible screen assembly 300 to move in a direction towards the outside of the accommodation space, or the outside of the electronic device 20, such that a part of the flexible screen assembly 300 originally accommodated in the accommodation space extends outside the accommodation space, or outside the electronic device 20, which makes the electronic device 20 extend and increases a display region of the electronic device 20. When the first carrier 100 and the second carrier 200 in the extending state move close to each other, the first driving member 210 and the second driving member 220 can drive the flexible screen assembly 300 to move in a direction towards the inside of the electronic device 20, such that a part of the flexible screen assembly 300 which originally extends outside the electronic device 20 retracts inside the electronic device 20, which makes the electronic device 20 restored to a traditional appearance and convenient to be carried.

In the related art, the second end of the flexible screen assembly is connected at a preset position which is between the first end of the flexible screen assembly and the second end of the flexible screen assembly, such that a part of the flexible screen assembly forms a closed-loop structure. Here, forces from multiple directions will be applied to the part of the flexible screen assembly at the preset position, such that a damage is easier to occur at the preset position than other positions. In addition, this connection manner makes assembly of the flexible screen assembly more difficult. As for two carriers being assembled first and then the two ends of the flexible screen assembly being fixed separately, during fixing, since the second end of the flexible screen assembly is directly fixed to the preset position in a form of bonding, the second end of the flexible screen assembly will be pulled when the flexible screen assembly is tensioned. After multiple movements, connection strength between the second end of the flexible screen assembly and the preset position will be reduced when the second end of the flexible screen assembly is pulled for many times. As a result, the connection strength of the second end of the flexible screen assembly is insufficient to make the flexible screen assembly tensioned after multiple uses. As for the flexible screen assembly being bent and fixedly connected first and then the flexible screen assembly being fixed to the two carriers, if a width of a closed loop is larger than a width of a carrier to-be-mounted, the flexible screen assembly will be slack due to insufficient tension force, and if the width of the closed loop is smaller than the width of the carrier to-be-mounted, the flexible screen assembly will be damaged caused by an excessive friction force between the carrier to-be-mounted and the flexible screen assembly. It can be understood that the flexible screen assembly and the two carriers are difficult to be assembled and complicated to be disassembled in this fixing manner. In addition, tolerance between the flexible screen assembly and the two carriers is difficult to be controlled properly, which leads to problems of more tolerance accumulation and a difficulty of realizing tension of the flexible screen assembly.

In implementations of the present disclosure, the first end of the flexible screen assembly 300 and the second end of the flexible screen assembly 300 each are connected with the first carrier 100, such that the flexible screen assembly 300 can be mainly stressed in a movement direction of the flexible screen assembly 300 without being stressed in redundant directions, and a damage to the flexible screen assembly due to forces concentrated at a certain position of the flexible screen assembly can be avoided. In addition, two ends of the flexible screen assembly in implementations of the present disclosure each are fixed to the first carrier. During assembly, after the first end of the flexible screen assembly 300 is fixed to the first carrier 100, the flexible screen assembly 300 is wrapped around the first driving member 210 and the second driving member 220 in turn, and then the second end of the flexible screen assembly 300 is fixed to the first carrier 100. Therefore, the assembly manner is simple, a tension degree of the flexible screen assembly is easy to be controlled, which are easy to be implemented.

It can be seen from FIG. 3 and FIG. 4 that when the first carrier 100 and the second carrier 200 move away from each other, or when the electronic device extends, a part of the flexible screen assembly 300 from the first end of the flexible screen assembly 300 to a position of the first driving member 210 becomes longer, and a part of the flexible screen assembly 300 from the second end of the flexible screen assembly 300 to a position of the second driving member 220 becomes shorter. When the first carrier 100 and the second carrier 200 move close to each other, the part of the flexible screen assembly 300 from the first end of the flexible screen assembly 300 to the position of the first driving member 210 becomes shorter, and the part of the flexible screen assembly 300 from the second end of the flexible screen assembly 300 to the position of the second driving member 220 becomes longer. However, during relative movement of the second carrier 200 and the first carrier 100, a length of a part of the flexible screen assembly 300 from the position of the first driving member 210 to the position of the second driving member 220 is kept unchanged.

It can be understood that when the flexible screen assembly 300 is wrapped around the first driving member 210, a part of the flexible screen assembly 300 at the position of the first driving member 210 forms a first turn, and when the flexible screen assembly 300 is wrapped around the second driving member 220, a part of the flexible screen assembly 300 at the position of the second driving member 220 forms a second turn. When the second carrier 200 moves relative to the first carrier 100, the flexible screen assembly 300 moves relative to the first driving member 210 and the second driving member 220. During extension of the first carrier 100 and the second carrier 200, the part of the flexible screen assembly 300 from the first end to the first turn becomes longer, and the part of the flexible screen assembly 300 from the second turn to the second end becomes shorter. The first turn refers to a part of the flexible screen assembly 300 abutting against the first driving member 210, and the second turn refers to a part of the flexible screen assembly 300 abutting against the second driving member 220. The part of the flexible screen assembly 300 from the first end to the first turn refers to a part of the flexible screen assembly 300 from the first end to any position in the first turn, such as a position where the first turn is tangent to the first driving member 210 or a middle position in the first turn. The part of the flexible screen assembly 300 from the second turn to the second end refers to a part of the flexible screen assembly 300 from the second end to any position in the second turn, such as a position where the second turn is tangent to the second driving member 220 or a middle position in the second turn.

In the related art, the flexible display screen is usually fixed by fixing one end of the flexible display screen and rolling and winding the other end of the flexible display screen around a scroll. In addition, when two housings move relative to each other, the flexible display screen is released or wound by rotation of the scroll. In this way, when the two housings have started to move, the scroll may have not yet started to rotate, which results in slackness of the flexible display screen due to no support of the housings, or when the scroll has started to rotate, the two housings may have not yet started to move, which results in a damage to a flexible screen due to an excessive force on the flexible display screen. It can be understood that in the related art, relative movement of the two housings and movement of the flexible screen assembly are driven separately, such that the relative movement of the two housings and the movement of the flexible screen assembly may be not synchronized due to asynchronous driving of the relative movement of the two housings and the movement of the flexible screen assembly. However, in implementations of the present disclosure, the flexible screen assembly 300 is wrapped around the first driving member 210 and the second driving member 220. The two ends of the flexible screen assembly 300 each are connected with the first carrier 100. When the first carrier and the second carrier are driven by a driving force (which may be a force applied by manual driving or a driving force applied by electric driving) to move, the first carrier and the second carrier will drive the flexible screen assembly 300 to move together. Compared with the related art, consistency between relative movement of the two carriers and movement of the flexible screen assembly 300 can be ensured, and a damage to the flexible screen assembly 300 can be reduced during movement of the two carriers.

In addition, in a manner that the flexible display screen is rolled and wound in the related art, during winding or releasing, a difference may exist between a rolling amount and a releasing amount, which results in different overall lengths of the flexible display screen in each state, such that the flexible display screen has different flatness in each state, thereby affecting a display effect of the flexible display screen. However, in implementations of the present disclosure, a length of the flexible screen assembly 300 is kept unchanged in each state, such that during movement of the flexible screen assembly 300, or when a part of the flexible screen assembly 300 retracts inside the electronic device 20, or when a part of the flexible screen assembly 300 extends outside the electronic device 20, flatness of the flexible screen assembly 300 is kept unchanged, which can provide a better display effect for a user.

A distance between the projection of the position where the second end of the flexible screen assembly 300 is connected with the first carrier 100 on the first carrier 100 and the projection of the first driving member 210 on the first carrier 100 is less than a distance between the projection of the position where the second end of the flexible screen assembly 300 is connected with the first carrier 100 on the first carrier 100 and the projection of the first driving member 210 on the first carrier 100. It can be understood that the position where the second end of the flexible screen assembly 300 is connected with the first carrier 100 is close to the first driving member 210. For example, reference can continue to be made to FIG. 3 and FIG. 4, and the first carrier 100 in implementations of the present disclosure includes a first side 110 and a second side 120 opposite to the first side 110. The first side 110 and the second side 120 may be two sides in a length direction of the electronic device 20. The first side 110 is away from the first driving member 210 relative to the second side 120, that is, the second side 120 is closer to the first driving member 210 than the first side 110, and a projection of the first side 110 on the first carrier 100 falls between the projection of the first driving member 210 on the first carrier 100 and the projection of the second driving member 220 on the first carrier 100. The first end of the flexible screen assembly 300 is connected with an external surface of the first side 110, and the second end of the flexible screen assembly 300 is connected with an internal surface of the second side 120. It should be noted that when the first carrier 100 includes two opposite side edges and a bearing plate, the first side 110 may include one of the two side edges and a region of the bearing plate adjacent to the side edge, and the second side 120 may include the other of the two side edges and a region of the bearing plate adjacent to the other side edge.

The second carrier 200 includes a third side 230 and a fourth side 240 opposite to the third side 230. The third side 230 and the fourth side 240 are two sides in the length direction of the electronic device 20. The third side 230 is disposed away from the second side 120 relative to the fourth side 240, that is, the third side 230 is a side away from the second side 120 and the fourth side 240 is a side close to the second side 120. The first driving member 210 is disposed at the third side 230 of the second carrier 200, and the second driving member 220 is disposed at the fourth side 240 of the second carrier 200. During mounting, the first end of the flexible screen assembly 300 is connected with the external surface of the first side 110 first, and then the second end of the flexible screen assembly 300 is connected with the internal surface of the second side 120 after the flexible screen assembly 300 is sequentially wrapped around the first driving member 210 and the second driving member 220, such that when the first carrier 100 and the second carrier 200 extend to the maximum distance, a part of the flexible screen assembly 300 can completely extend outside the electronic device 20, and when the first carrier 100 and the second carrier 200 completely retract, a part of the flexible screen assembly 300 can be completely accommodated in the electronic device 20. It can be understood that compared with disposing the first driving member 210 and the second driving member 220 at the middle of the second carrier 200, a distance difference caused by the relative movement of the first carrier 100 and the second carrier 200 can be utilized to the maximum extent by disposing the first driving member 210 and the second driving member 220 at two opposite sides of the second carrier 200.

As illustrated in FIG. 3 and FIG. 4, the part of the flexible screen assembly 300 from the first end to the first turn is parallel to the part of the flexible screen assembly 300 from the second turn to the second end, such that during extension of the electronic device 20, a distance of the relative movement of the first carrier 100 and the second carrier 200 is equal to a length of the flexible screen assembly 300 extending outside the electronic device 20. For example, during the relative movement of the first carrier 100 and the second carrier 200 in implementations of the present disclosure, it is assumed that the first carrier 100 and the second carrier 200 move away from each other by a movement distance of L1, since the first driving member 210 and the second driving member 220 are connected with the second carrier 200, each of a movement distance between the first driving member 210 and the first carrier 100 and a movement distance between the second driving member 220 and the first carrier 100 is also L1. The flexible screen assembly 300 is wrapped around two driving members, and when the two driving members move, the two driving members will drive the flexible screen assembly 300 to extend together, such that the part of the flexible screen assembly 300 from the first end of the flexible screen assembly 300 to the first turn becomes longer, a length increased is also L1. The part of the flexible screen assembly 300 from the second end of the flexible screen assembly 300 to the second turn becomes shorter. Since an overall length of the flexible screen assembly 300 is unchanged when the flexible screen assembly 300 is not fatigue, and a relative distance between the first driving member 210 and the second driving member 220 is unchanged, a length by which the part of the flexible screen assembly 300 from the second end of the flexible screen assembly 300 to the second turn is shortened should also be L1. Similarly, it is assumed that the first carrier 100 and the second carrier 200 move close to each other by a movement distance of L2, a length of the part of the flexible screen assembly 300 from the first end of the flexible screen assembly 300 to the first turn increases by L2 compared with the length before movement, and a length of the part of the flexible screen assembly 300 from the second end of the flexible screen assembly 300 to the second turn decreases by L2 compared with the length before movement.

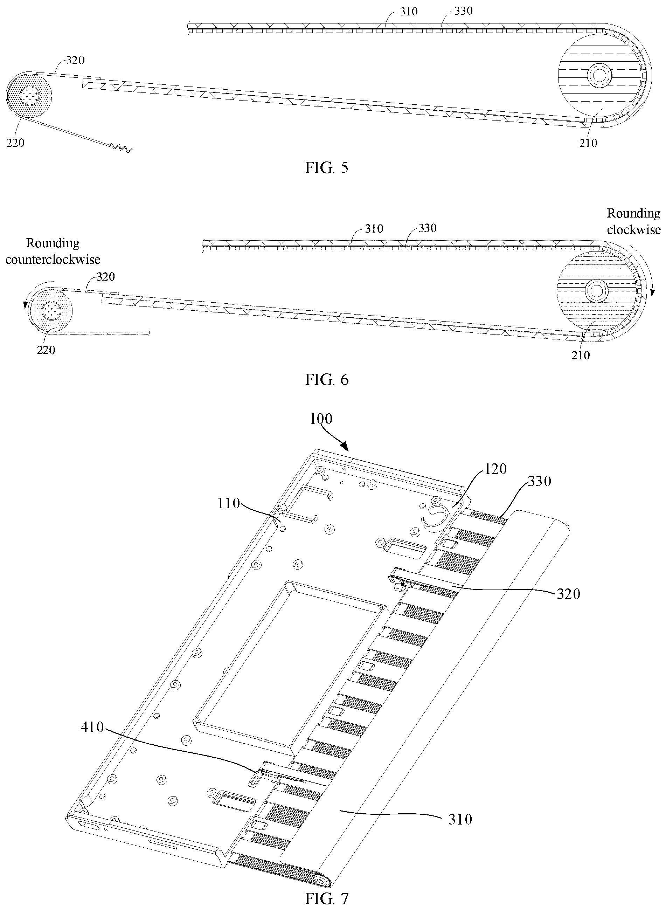

It should be noted that reference can be made to FIG. 5, which is a second schematic structural diagram of a flexible screen assembly, a first driving member, and a second driving member in the electronic device illustrated in FIG. 3. The part of the flexible screen assembly 300 from the first end to the first turn may also not be parallel to the part of the flexible screen assembly 300 from the second turn to the second end. Here, since two parts are not disposed in parallel, the flexible screen assembly 300 needs to set aside a part of length to compensate for an amount of tilt caused by the two parts being not in parallel. It can be understood that during the extension of the electronic device, a length shortened of the part of the flexible screen assembly 300 from the second turn to the second end when the two parts are not disposed in parallel will be smaller than the length shortened of the part of the flexible screen assembly 300 from the second turn to the second end when the two parts are disposed in parallel, such that the length of the flexible screen assembly 300 that can extend outside the electronic device becomes shorter. In order to solve this problem, the second end of the flexible screen assembly 300 can be connected with the first carrier 100 through an elastic mechanism (such as a spring), and the elastic mechanism can be elastically deformed to make the distance between the second end of the flexible screen assembly 300 and the first carrier 100 adjustable, such that an elastic deformation amount of the elastic mechanism can absorb the amount of tilt caused by the part of the flexible screen assembly 300 from the first end to the first turn being not parallel to the part of the flexible screen assembly 300 from the second turn to the second end.

As illustrated in FIG. 3 and FIG. 4, a direction in which the flexible screen assembly 300 is wrapped around the first driving member 210 is opposite to a direction in which the flexible screen assembly 300 is wrapped around the second driving member 220. For example, the flexible screen assembly 300 may be wrapped around the first driving member 210 clockwise and the flexible screen assembly 300 may be wrapped around the second driving member 220 counterclockwise.

When the flexible screen assembly 300 moves, the flexible screen assembly 300 rubs against surfaces of the first driving member 210 and the second driving member 220. When a friction force is too large, movement of the flexible screen assembly 300 is impeded, which reduces smoothness of the movement of the flexible screen assembly 300 and damages the flexible screen assembly 300. In implementations of the present disclosure, in order to improve the smoothness of the movement of the flexible screen assembly 300, the first driving member 210 is configured to be rotatable relative to the second carrier 200, and the second driving member 220 is configured to be rotatable relative to the second carrier 200, where a rotation direction of the first driving member 210 is the same as a rotation direction of the second driving member 220.

For example, the second carrier 200 may be provided with a first fixed shaft at the third side 230, and the first driving member 210 may be sleeved on the first fixed shaft and rotatably connected with the first fixed shaft (for example, the first driving member 210 may be connected with the first fixed shaft through balls). The second carrier 200 may be provided with a second fixed shaft at the fourth side 240, and the second driving member 220 may be sleeved on the second fixed shaft and rotatably connected with the second fixed shaft (for example, the second driving member 220 may be connected with the second fixed shaft through balls). When the first carrier 100 and the second carrier 200 move away from each other, the first driving member 210 is configured to push the flexible screen assembly 300 to move in a first direction. When the flexible screen assembly 300 moves, the flexible screen assembly 300 is configured to drive the first driving member 210 to rotate around the first fixed shaft counterclockwise and drive the second driving member 220 to rotate around the second fixed shaft clockwise, so as to extend a part of the flexible screen assembly 300 to the outside of the electronic device 20 to expand a display region of the flexible screen assembly 300. When the first carrier 100 and the second carrier 200 move close to each other, the second driving member 220 is configured to push the flexible screen assembly to move in a second direction. When the flexible screen assembly 300 moves, the flexible screen assembly 300 is configured to drive the second driving member 220 to rotate around the second fixed shaft counterclockwise and drive the first driving member 210 to rotate around the first fixed shaft counterclockwise, so as to extend a part of the flexible screen assembly 300 to the outside of the electronic device 20, thereby reducing the display region of the flexible screen assembly 300 and reducing an overall size of the electronic device 20. Compared with the first driving member 210 and second driving member 220 each being fixed, the first driving member 210 and the second driving member 220 in implementations of the present disclosure can rotate relative to the second carrier 200, which can reduce a movement friction force between the flexible screen assembly 300 and each of the first driving member 210 and the second driving member 220 during the movement of the flexible screen assembly 300, improve the smoothness of the movement of the flexible screen assembly 300, and reduce a damage to the flexible screen assembly 300.

It should be noted that an arrangement manner of the flexible screen assembly 300 is not limited to this. For example, reference can be made to FIG. 6, which is a third schematic structural diagram of a flexible screen assembly, a first driving member, and a second driving member in the electronic device illustrated in FIG. 3. A direction in which the flexible screen assembly 300 is wrapped around the first driving member 210 is the same as a direction in which the flexible screen assembly 300 is wrapped around the second driving member 220. For example, the flexible screen assembly 300 may be wrapped around the first driving member 210 clockwise and the flexible screen assembly 300 may be wrapped around the second driving member 220 clockwise. The first driving member 210 and the second driving member 220 may also rotate relative to the second carrier 200, and a rotation direction of the first driving member 210 is different from a rotation direction of the second driving member 220. For example, when the first carrier 100 moves away from the second carrier 200, the first driving member 210 is configured to push the flexible screen assembly 300 to move in the first direction. When the flexible screen assembly 300 moves, the flexible screen assembly 300 is configured to drive the first driving member 210 to rotate around the first fixed shaft counterclockwise and drive the second driving member 220 to rotate around the second fixed shaft clockwise, so as to extend a part of the flexible screen assembly 300 to the outside of the electronic device 20 to expand a display region of the flexible screen assembly 300. When the first carrier 100 and the second carrier 200 move close to each other, the second driving member 220 is configured to push the flexible screen assembly to move in the second direction. When the flexible screen assembly 300 moves, the flexible screen assembly 300 is configured to drive the second driving member 220 to rotate around the second fixed shaft counterclockwise and drive the first driving member 210 to rotate around the first fixed shaft clockwise, so as to extend a part of the flexible screen assembly 300 to the outside of the electronic device 20, thereby reducing the display region of the flexible screen assembly 300 and reducing the overall size of the electronic device 20.

As illustrated in FIG. 3 to FIG. 6, the first driving member 210 and the second driving member 220 in implementations of the present disclosure each have a cylindrical structure, and the first driving member 210 has a radius larger than the second driving member 220. Compared with setting a radius of the second driving member 220 to be the same as or larger than the radius of the first driving member 210, by setting a size of the second driving member 220 in the electronic device 20 to be smaller than a size of the first driving member 210, it is possible to save an internal space of the electronic device 20 occupied by the first driving member 210.

Reference can continue to be made to FIG. 3 and FIG. 4, and during the movement of the flexible screen assembly 300, a part of the flexible screen assembly 300 is always accommodated in the electronic device 20. In order to simplify a structure of the flexible screen assembly 300, the part of the flexible screen assembly 300 accommodated in the electronic device 20 may be configured as a part for no picture display, or may be configured as a part without a flexible display module. For example, the flexible screen assembly 300 may include a flexible display module 310 and a driving belt 320. The flexible display module 310 has one end connected with the external surface of the first carrier 100, the flexible display module 310 has the other end connected with one end of the driving belt 320, and the flexible display module 310 is wrapped around the first driving member 210. The other end of the driving belt 320 is connected to the internal surface of the first carrier 100, and the driving belt 320 is wrapped around the second driving member 220.

When the first carrier 100 and the second carrier 200 move away from each other, the first driving member 210 is configured to push the flexible display module 310 to move in the first direction and drive the driving belt 320 to move in the first direction, such that a first part of the flexible display module 310 extends outside the electronic device 20 to display a picture together with a second part of the flexible display module 310. A display content of the first part of the flexible display module 310 may be the same as or different from a display content of the second part of the flexible display module 310. Here, the driving belt 320 is accommodated in the electronic device 20, and a distance between one end of the driving belt 320 and the second driving member 220 is larger than a distance between the other end of the driving belt 320 and the second driving member 220. When the first carrier 100 and the second carrier 200 move close to each other, the second driving member 220 is configured to push the driving belt 320 to move in the second direction and drive the flexible display module 320 to move in the second direction, such that the first part of the flexible display module 310 retracts inside the electronic device 20, and only the second part of the flexible display module 310 is exposed beyond the electronic device 20. Here, the driving belt 320 is still accommodated in the electronic device 20, and the distance between one end of the driving belt 320 and the second driving member 220 is smaller than the distance between the other end of the driving belt 320 and the second driving member 220.

When the first part of the flexible display module 310 retracts inside the electronic device 20, the electronic device 20 may control the first part of the flexible display module 310 to be in a sleep state to save power, or control the first part of the flexible display module 310 to be in an operating state to meet other requirements of a user.

Reference can be made to FIG. 7, which is a schematic structural diagram of a first carrier and a flexible screen assembly in the electronic device illustrated in FIG. 1. The flexible display module 310 is provided with a support member 330 at a non-display surface. The support member 300 can support the flexible display module 310 to improve flatness of the flexible display module 310, and can also separate the flexible display module 310 from other components to protect the flexible display module 310. One end of the driving belt 320 is connected with the support member 330. Compared with a connection between the driving belt 320 and the flexible display module 310, the flexible display module 310 can be prevented from being directly subjected to a pulling force of the driving belt 320 through a connection between the driving belt 320 and the support member 330, and the flexible display module 310 can be further protected. A part of the support member 330 that is located on the non-display surface of the first part of the flexible display module 310 may include multiple support bars 331 arranged at intervals, and two adjacent support bars 331 are connected with each other. Compared with a plate-like support structure, this structure where the multiple support bars 331 are arranged at intervals and two adjacent support bars 331 are connected with each other, can make the part of the support member 330 that is located on the non-display surface of the first part of the flexible display module 310 easy to be bent, so as to reduce a difficulty of disposing the support member 330 around the first driving member 210, or improve fit of the support member 330 being wrapped around the first driving member 210. A structure of the part of the support member 330 that is located on the non-display surface of the second part of the flexible display module 310 may be the same as or different from a structure of the part that is located on a non-display surface of the second part of the flexible display module 310. For example, the part of the support member 330 that is located on the non-display surface of the second part of the flexible display module 310 may has a plate-like structure.

The number of the second driving member 220 may be one or more. For example, as illustrated in FIG. 6, the number of the second driving member 220 is two, and two second driving members 220 are arranged at an interval, for example one second driving member 220 is disposed close to the top of the second carrier 200 and the other second driving member 220 is disposed close to the bottom of the second carrier 200. Here, the number of the driving belt 320 may be two, one driving belt 320 is wrapped around one second driving member 220, and two second driving members 220 are connected with the other end of the flexible display module 310 together, such that when the first carrier 100 and the second carrier 200 move close to each other, the first carrier 100 and the second carrier 200 pull the flexible display module 310 to move in the second direction together. Therefore, the flexible display module 310 is more stable during the movement of the flexible display module 310, and the flexible display module 310 is avoided from being damaged due to deflection of the flexible display module 310 during the movement of the flexible display module 310.

The flexible screen assembly 300 is usually made of a flexible material, which may have a decreased stress value after multiple movements, resulting in slackness of the flexible screen assembly 300. In order to solve the above problems, the second carrier 200 in implementations of the present disclosure is configured to be movably connected with the first driving member 210 and/or the second driving member 220, and an adjustment mechanism is additionally disposed. The adjustment mechanism can be used to adjust a relative position between the second carrier 200 and at least one of the first driving member 210 or the second driving member 220, so as to increase a relative distance between the first driving member and the second driving member, such that a tension value of the flexible screen assembly 300 is within a preset range, thereby ensuring that the flexible screen assembly 300 is kept flat under tension.

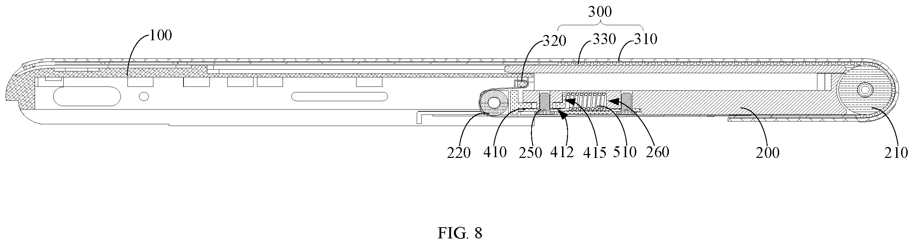

For example, reference can be made to FIG. 4 and FIG. 8 together, where FIG. 8 is a schematic structural diagram of the electronic device illustrated in FIG. 4 with a second driving member displaced in. In implementations of the present disclosure, the second carrier 200 can be movably connected with the second driving member 220 through a first bracket 410, and a first elastic member 510 is additionally disposed between the first driving member 210 and the second driving member 220. The first elastic member 510 has one end abutting against the first bracket 410, and the first elastic member 510 has the other end abutting against the second carrier 200. The first elastic member 510 can be elastically deformed to drive the first bracket 410 to move in a direction away from the first driving member 210, thereby increasing a distance between the first driving member 210 and the second driving member 220.

The first elastic member 510 may be a compression spring or other elastically deformable device, and a maximum deformation amount of the first elastic member 510 is positively related to a slackness degree of the flexible screen assembly 300. It can be understood that the maximum deformation amount of the first elastic member 510 is set according to the slackness degree of the flexible screen assembly 300. When the flexible screen assembly 300 is slacker, the maximum deformation amount of the first elastic member 510 becomes larger. For example, a test can be performed according to usage of the flexible screen assembly 300 to obtain the slackness degree of the flexible screen assembly 300 during service life of the flexible screen assembly 300, in other words, how much the maximum slackness amount of the flexible screen assembly 300 can reach. Then the maximum deformation amount of the first elastic member 510 is set according to the maximum slackness amount of the flexible screen assembly 300, such that the maximum deformation amount of the first elastic member 510 is sufficient to absorb the maximum slackness of the flexible screen assembly 300.

It can be understood that when the flexible screen assembly 300 is slack, the first elastic member 510 is configured to push the first bracket 410 to move to increase the distance between the first driving member 210 and the second driving member 220, thereby offsetting a length variation of the flexible screen assembly 300 caused by the decreased stress value, such that a current tension value of the flexible screen assembly 300 is restored to be within the preset range and then the flatness of the flexible screen assembly 300 is ensured.

In addition, the elastic mechanism in implementations of the present disclosure cannot only absorb a slackness amount of the flexible screen assembly 300 after multiple movements of the flexible screen assembly 300, but also absorb a slackness amount caused by improper mounting of the flexible screen assembly 300. It can be understood that when the flexible screen assembly 300 is mounted, the flexible screen assembly 300 mounted may not meet the requirement that the current tension value is within the preset range. Here, the first elastic member 510 can drive the first bracket 410 to move to increase the distance between the first driving member 210 and the second driving member 220, thereby absorbing the slackness amount of the flexible screen assembly 300 due to improper mounting. It can also be understood that a mounting difficulty of the flexible screen assembly 300 can be reduced due to arrangement of the first elastic member 510. In other words, due to the arrangement of the first elastic member 510, an elastic force of the first elastic member 510 can keep a stress value of the flexible screen assembly 300 within the preset range, regardless of slackness of the flexible screen assembly 300 caused by any reason.

It can be understood that in an initial state (such as a state after the whole device is mounted), the first elastic member 510 is compressed. It is assumed that the first elastic member 510 has a compression length of x, and the flexible screen assembly 300 has a slackness length of h. Here, the first elastic member 510 can be elastically deformed, the first bracket 410 is driven to move under the elastic force of the first elastic member 510, and the second driving member 220 is driven to move in the direction away from the first driving member 210. Since the second driving member 220 is limited by the flexible screen assembly 300, a distance that the second driving member 220 can move is equal to or slightly larger than slackness length h of the flexible screen assembly 300. When the second driving member 220 moves, the first elastic member 510 can absorb the slackness length of the flexible screen assembly 300, such that the stress value of the flexible screen assembly 300 is restored to be within the preset range. Here, the compression length of the first elastic member 510 is equal to or slightly smaller than x-h, and at the same time, the first elastic member 510 continues to maintain elasticity, so as to absorb the slackness amount caused by the decreased stress value and slackness of the flexible screen assembly 300.

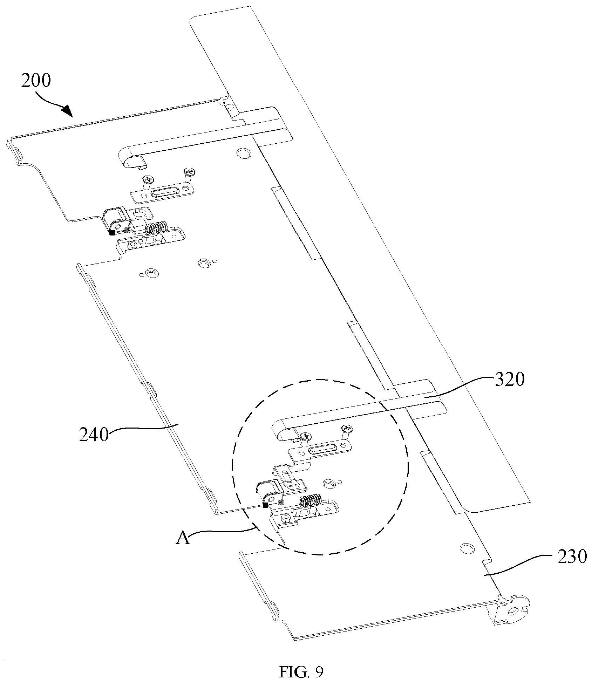

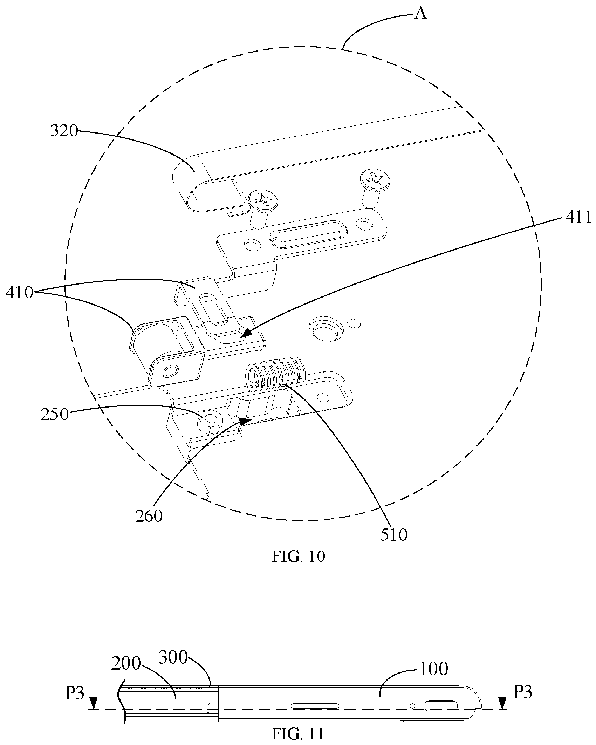

Reference can continue to be made to FIG. 9 and FIG. 10, where FIG. 9 is an exploded schematic structural diagram of a second carrier and a flexible screen assembly in the electronic device illustrated in FIG. 3, and FIG. 10 is an enlarged schematic structural diagram of the second carrier and the flexible screen assembly at region A in FIG. 9. The second carrier 200 is provided with a protrusion 250, and the first bracket 410 defines a through hole 411. The first bracket 410 is sleeved on the protrusion 250 through the through hole 411, or the protrusion 250 passes through the through hole 411. The through hole 411 has a size larger than the protrusion 250 in the movement direction of the flexible screen assembly 300, such that a first movement space 412 is defined between the first bracket 410 and the protrusion 250.

The first movement space 412 is smaller than the maximum deformation amount when the first elastic member 510 is elastically deformed, so as to ensure that the first elastic member 510 is always in a compressed state under an abutting force of the first bracket 410 and an abutting force of the second carrier 200, such that the first elastic member 510 in the compressed state always has an elastic force on the first bracket 410, to make the stress value of the flexible screen assembly 300 always within the preset range. It can be understood that when the first movement space 412 is too large, the first elastic member 510 may fail to abut between the second carrier 200 and the first bracket 410 after being completely released, such that the elastic force of the first elastic member 510 on the first bracket 410 decreases or disappears, resulting in a slack or wrinkled flexible screen assembly 300.

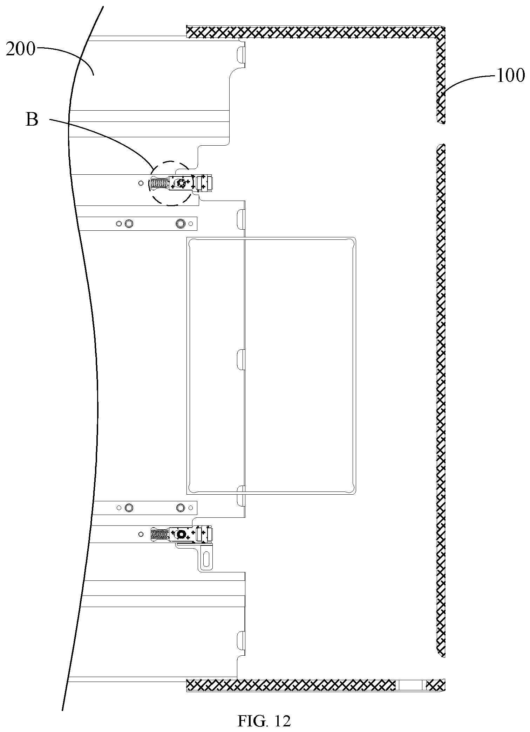

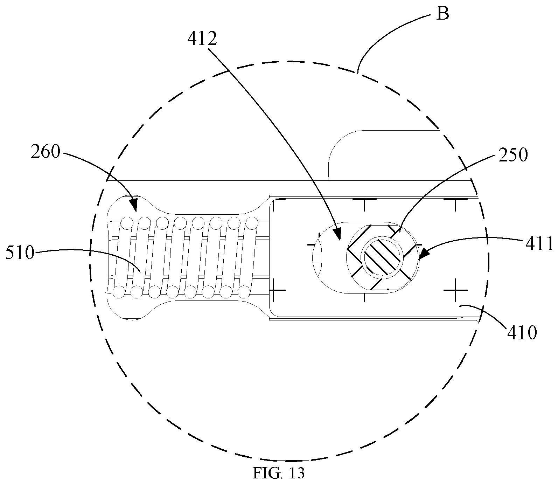

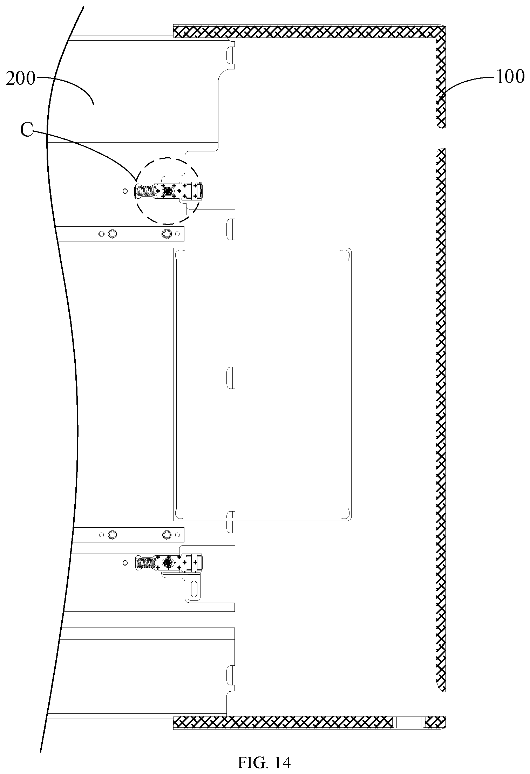

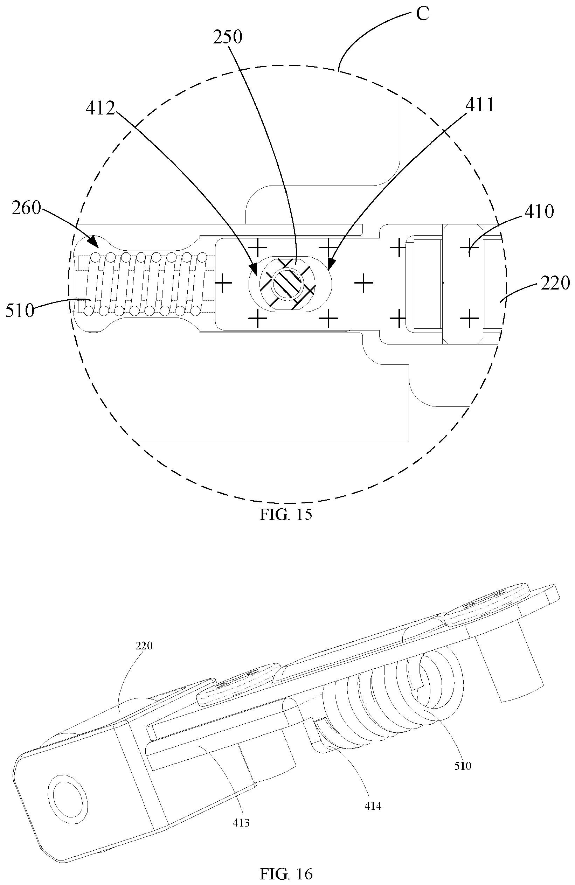

Reference can be made to FIG. 11 to FIG. 15 together, where FIG. 11 is a partial schematic structural diagram of an electronic device provided in implementations of the present disclosure, FIG. 12 is a schematic structural diagram of the electronic device illustrated in FIG. 11 taken in direction P3-P3, FIG. 13 is an enlarged schematic structural diagram of the electronic device at region B in FIG. 12, FIG. 14 is a schematic structural diagram of the electronic device illustrated in FIG. 12 with a second driving member displaced, and FIG. 15 is an enlarged schematic structural diagram of the electronic device at region C in FIG. 14. A movement process of the second driving member 220 is described below with reference to the accompanying drawings. In the initial state (such as the state after the whole device is mounted), the first elastic member 510 is compressed, and the first bracket 410 is in a first position relative to the protrusion 250. When the flexible screen assembly 300 is slack, the first elastic member 510 is elastically deformed to apply an elastic force to the first bracket 410. The first bracket 410 moves within the first movement space 412 under the elastic force of the first elastic member 510, such that the first bracket 410 moves to a second position relative to the protrusion 250. When the first bracket 410 moves, the first bracket 410 is configured to drive the second driving member 22 to move in the direction away from the first driving member 210 to increase the distance between the first driving member 210 and the second driving member 220, and absorbs the slackness amount of the flexible screen assembly 300. In order to make the first bracket 410 move in a preset direction without deflection, the through hole 411 in implementations of the present disclosure has a strip-shaped structure and abuts with the protrusion 250 in all directions except the movement direction of the flexible screen assembly 300, so as to limit the movement direction of the first bracket 410, such that the first bracket 410 moves in the movement direction of the flexible screen assembly 300, and the flatness of the flexible screen assembly 300 can be prevent from being affected due to the deflection of the first bracket 410 when the first bracket 410 moves.

Reference can be made to FIG. 4, FIG. 10, FIG. 13, and FIG. 16, where FIG. 16 is a schematic structural diagram of a first bracket, a second driving member, and an elastic member in the second carrier and the flexible screen assembly illustrated in FIG. 9. In implementations of the present disclosure, the second carrier 200 defines an accommodating groove 260, and the accommodating groove 260 can be used to accommodate the first elastic member 510 and a part of the first bracket 410 which abuts against the first elastic member 510. For example, the second carrier 200 has a bottom wall and a side wall, and the side wall is wrapped around a periphery of the bottom wall to define the accommodating groove 260. The first bracket 410 has a straight portion 413 and a bending portion 414, the through hole 411 is defined at the straight portion 413, and the bending portion 414 is bendably disposed relative to the straight portion 413. The bending portion 414 is located in the accommodating groove 260, and a second movement space 415 is defined between the bending portion 414 and a groove wall (or a side wall) of the accommodating groove 260. The first elastic member 510 is accommodated in the accommodating groove 260, one end of the first elastic member 510 abuts against the bending portion 414, and the other end of the first elastic member 510 abuts against the groove wall (or the side wall) of the accommodating groove 260. When the flexible screen assembly 300 is slack, the first elastic member 510 is elastically deformed, so as to push the bending portion 414 to compress the second movement space 415. Here, the straight portion 413 moves in the first movement space 412, such that a relative position between the first bracket 410 and the second carrier 200 is changed, the distance between the first driving member 210 and the second driving member 220 is increased, and the slackness amount of the flexible screen assembly 300 is absorbed.

The first elastic member 510 in implementations of the present disclosure is disposed at the second carrier 200, and compared with the first elastic member 510 being disposed at the first carrier, a space occupied by the first carrier 100 can be reduced, such that more devices can be disposed at the first carrier 100.

It should be noted that when the second driving member 220 is movably connected with the second carrier 200, the first driving member 210 may be fixedly connected with the second carrier 200, or be movably connected with the second carrier 200. For example, the first driving member 210 can be movably connected with the second carrier 200 through a second bracket, one end of the first elastic member 510 abuts against the first bracket 410, and the other end of the first elastic member 510 abuts against the second bracket. The first elastic member 510 is elastically deformed to drive the first bracket 410 to move in the direction away from the first driving member 210 and drive the second bracket to move in a direction away from the second driving member 220, thereby increasing the distance between the first driving member 210 and the second driving member 220. The second bracket has the same structure as the first bracket, which will not be repeated here. The second bracket may also have a different structure from the first bracket 410, as long as the second bracket is movable.

For another example, the adjustment mechanism can further include a second elastic member. The first driving member 210 can be movably connected with the second carrier 200 through the second bracket, one end of the second elastic member abuts against the second bracket, and the other end of the second elastic member abuts against the second carrier 200. The second elastic member is elastically deformed to drive the second bracket to move in the direction away from the second driving member 220. The second elastic member may have the same structure as the first elastic member and have the same connection relationships with other components as the first elastic member, which will not be repeated here. It should be noted that the second elastic member may also have a different structure from the first elastic member and have different connection relationships with other components from the first elastic member.

It should also be noted that a structure of the adjustment mechanism is not limited to this. For example, the adjustment mechanism may also include only the second elastic member. For example, the first driving member 210 is movably connected with the second carrier 200 through the second bracket, and the second driving member 220 is fixedly connected with the second carrier 200. The second elastic member is elastically deformed to drive the first driving member 210 to move in the direction away from the second driving member 220, so as to increase the distance between the first driving member 210 and the second driving member 220.

In implementations of the present disclosure, the adjustment mechanism can also be used to automatically adjust the relative distance between the first driving member 210 and the second driving member 220 according to the current tension value of the flexible screen assembly 300, such that the tension value of the flexible screen assembly 300 is within the preset range. It can be understood that when the tension value of the flexible screen assembly 300 is too great, the flexible screen assembly 300 may be broken, and when the tension value of the flexible screen assembly 300 is too little, the flexible screen assembly 300 may be wrinkled. The preset range may be a range preset according to characteristics of the flexible screen assembly 300, such that when the tension value of the flexible screen assembly 300 is within the preset range, the flexible screen assembly 300 can neither be broken nor wrinkled.

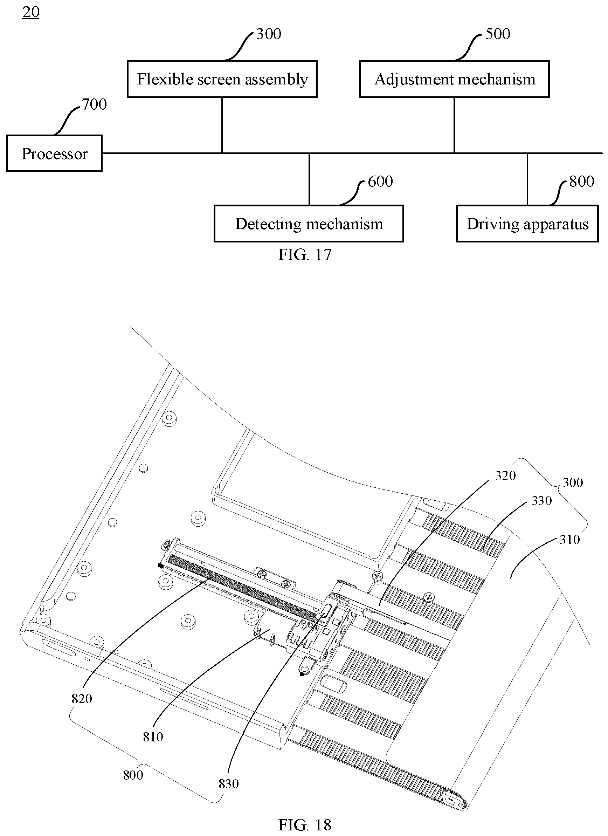

For example, reference can be made to FIG. 17, where FIG. 17 is a third schematic structural diagram of an electronic device provided in implementations of the present disclosure. The first driving member 210 can be movably connected with the second carrier 200 through a first movement structure. The electronic device 20 can be provided with a detecting mechanism 600, and a processor 700 of the electronic device 20 can be connected with the detecting mechanism 600 and the adjustment mechanism 500 respectively. The current tension value of the flexible screen assembly 300 is detected by the detecting mechanism 600, and then a detection result is fed back to the processor 700. When the current tension value of the flexible screen assembly 300 is less than the minimum value within the preset range, the processor 700 can control the adjustment mechanism 500 to drive the first movement structure to move in the direction away from the second driving member 220, so as to increase the relative distance between the first driving member 210 and the second driving member 220, and then absorb the length variation of the flexible screen assembly 300 caused by an insufficient tension value, such that the tension value of the flexible screen assembly 300 is within the preset range. When the current tension value of the flexible screen assembly 300 is greater than the maximum value within the preset range, the processor 700 can control the adjustment mechanism 500 to drive the first movement structure to move in a direction close to the second driving member 220, so as to reduce the relative distance between the first driving member 210 and the second driving member 220, and then relieve a situation that the flexible screen assembly 300 is too tight due to an excessive tension value of the flexible screen assembly 300, such that the tension value of the flexible screen assembly 300 is within the preset range.

For another example, the second driving member 220 can be movably connected with the second carrier 200 through a second movement structure. When the current tension value of the flexible screen assembly 300 is less than the minimum value within the preset range, the processor 700 can control the adjustment mechanism 500 to drive the second movement structure to move in the direction away from the first driving member 210, so as to increase the relative distance between the first driving member 210 and the second driving member 220, such that the tension value of the flexible screen assembly 300 is within the preset range. When the current tension value of the flexible screen assembly 300 is greater than the maximum value within the preset range, the processor 700 can control the adjustment mechanism 500 to drive the second movement structure to move in a direction close to the first driving member 210, so as to reduce the relative distance between the first driving member 210 and the second driving member 220, such that the tension value of the flexible screen assembly 300 is within the preset range.

The first driving member 210 and the second driving member 220 both can be movably connected with the second carrier 200, and the processor 700 can control the adjustment mechanism 500 to drive the first driving member 210 and the second driving member 220 to move simultaneously to increase a distance of the first driving member 210 or decrease a distance of the second driving member 220.

In this scheme, by using the adjustment mechanism, the first driving member and the second driving member with an unchanged relative position, and the flexible display screen assembly, not only can the display region of the electronic device 20 be adjustable, but also the flatness of the flexible screen assembly 300 can be ensured in various states.

In implementations of the present disclosure, the relative movement between the first carrier 100 and the second carrier 200 can be realized by manual driving, for example, the first carrier 100 and the second carrier 200 can be pulled by two hands of a user to move relative to each other. The relative movement between the first carrier 100 and the second carrier 200 can also be realized by electric driving. The electronic device 20 can be further provided with a driving apparatus 800, and the driving apparatus 800 is configured to drive the second carrier 200 to move relative to the first carrier 100. The driving apparatus 800 may include a driving motor (or an electric motor) and a transmission structure, the transmission structure is connected with the first carrier 100 and/or the second carrier 200 in a transmission manner, and the driving motor is configured to drive the transmission structure to move. When the transmission structure moves, the transmission structure can drive the first carrier 100 and/or the second carrier 200 to move together to realize the relative movement of the first carrier 100 and the second carrier 200. The transmission structure may be a transmission screw rod or a transmission gear. For example, reference can be made to FIG. 18, which is a partial schematic structural diagram of an electronic device provided in implementations of the present disclosure, and the driving apparatus 800 may include a driving motor 810, a transmission screw rod 820, and a connecting member 830. The connecting member 830 is connected with the transmission screw rod 820 in a transmission manner, and the driving motor 810 is configured to drive the transmission screw rod 820 to rotate to drive the connecting member 830 to move. When the connecting member 830 moves, the connecting member 830 is configured to drive the second carrier 200 to move.

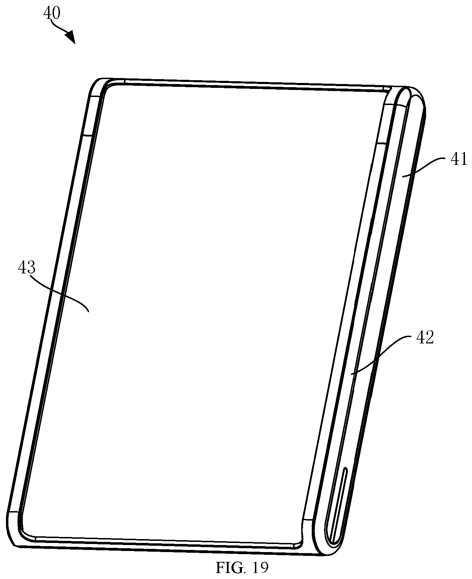

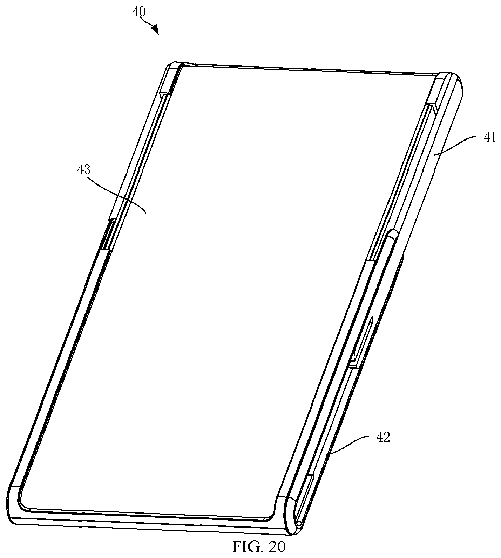

It should be noted that a pulling manner of the electronic device 20 is not limited to this. For example, reference can be made to FIG. 19 and FIG. 20, where FIG. 19 is a fourth schematic structural diagram of an electronic device provided in implementations of the present disclosure, and FIG. 20 is a fifth schematic structural diagram of an electronic device provided in implementations of the present disclosure. The pulling manner of an electronic device such as an electronic device 40 provided in implementations of the present disclosure may be horizontal pulling. The electronic device 40 may include a first carrier 41, a second carrier 42, and a flexible screen assembly 43. The first carrier 41 and the second carrier 42 can be used to carry the electronic device 40. The first carrier 41 and the second carrier 42 can move relative to each other, such that a part of the flexible screen assembly 43 extends outside or retracts inside the electronic device 40. Longitudinal pulling refers to a manner of pulling in a direction perpendicular to a display direction of the flexible screen assembly 43.

The electronic device provided in implementations of the present disclosure are introduced in detail in the foregoing, and specific examples are applied herein to set forth the principle and implementations of the present disclosure, and the foregoing illustration of implementations is only to help in understanding the present disclosure. Meanwhile, those of ordinarily skill in the art may make variations and modifications to the present disclosure in terms of the specific implementations within the scope of the appended claims.

## Claims

1. An electronic device (20), comprising:
a first carrier (100);
a second carrier (200) movable relative to the first carrier (100) to make the electronic device (20) extend;
a first driving member (210) and a second driving member (220) each disposed at the second carrier (200); and
a flexible screen assembly (300), having a first end and a second end each connected with the first carrier (100), and wrapped around the first driving member (210) and the second driving member (220), wherein a part of the flexible screen assembly (300) located at the first driving member (210) forms a first turn, and a part of the flexible screen assembly (300) located at the second driving member (220) forms a second turn,
wherein the flexible screen assembly (300) is configured to move relative to the first driving member (210) and the second driving member (220) when the second carrier (200) moves relative to the first carrier (100), and during extension of the electronic device (20), a part of the flexible screen assembly (300) from the first end to the first turn becomes longer, and a part of the flexible screen assembly (300) from the second turn to the second end becomes shorter,
**characterized in that**
the electronic device (20) further comprises an adjustment mechanism, and the adjustment mechanism is configured to finely adjust a relative distance between the first driving member (210) and the second driving member (220) when the flexible screen assembly (300) is slack, and
wherein the electronic device (20) further comprises a processor (700) and a detecting mechanism (600), wherein the processor (700) is electrically coupled with the detecting mechanism (600) and the adjustment mechanism respectively, wherein the detecting mechanism (600) is configured to detect a state of the flexible screen assembly (300), and wherein the processor (700) is configured to:
control the adjustment mechanism to drive the first driving member (210) to move in a direction away from the second driving member (220), and/or
control the second driving member (220) to move in a direction away from the first driving member (210),
to increase the relative distance between the first driving member (210) and the second driving member (220) when the flexible screen assembly (300) is slack.

2. The electronic device (20) of claim 1, wherein the part of the flexible screen assembly (300) from the first end to the first turn is parallel to the part of the flexible screen assembly (300) from the second end to the second turn.

3. The electronic device (20) of claim 2, wherein the flexible screen assembly (300) is wrapped around the first driving member (210) clockwise, and the first driving member (210) and the second driving member (220) each are rotatably connected with the second carrier (200).

4. The electronic device (20) of claim 1, wherein the part of the flexible screen assembly (300) from the first end to the first turn is not parallel to the part of the flexible screen assembly (300) from the second end to the second turn.

5. The electronic device (20) of claim 4, wherein the second end of the flexible screen assembly (300) is connected with the first carrier (100) through an elastic mechanism, and the elastic mechanism is elastically deformed to make a distance between the second end of the flexible screen assembly (300) and the first carrier (100) adjustable.

6. The electronic device (20) of claim 1, wherein the first driving member (210) has a diameter larger than the second driving member (220).

7. The electronic device (20) of claim 1, wherein the flexible screen assembly (300) comprises a flexible display module (310) and a driving belt (320), the flexible display module (310) has one end connected with the first carrier (100), the flexible display module (310) is wrapped around the first driving member (210), the flexible display module (310) has another end connected with one end of the driving belt (320), another end of the driving belt (320) is connected with the first carrier (100), and the driving belt (320) is wrapped around the second driving member (220).

8. The electronic device (20) of claim 1, wherein the flexible screen assembly (300) comprises a flexible display module (310), a support member (330), and a driving belt (320), the flexible display module (310) covers the support member (330), the support member (330) is wrapped around the first driving member (210), the support member (330) has one end connected with the first carrier (100), the support member (330) has another end connected with one end of the driving belt (320), another end of the driving belt (320) is connected with the first carrier (100), and the driving belt (320) is wrapped around the second driving member (220).

9. The electronic device (20) of claim 1, wherein the second driving member (220) is movably connected with the second carrier (200) through a first bracket (410), the adjustment mechanism comprises a first elastic member (510), the first elastic member (510) has one end abutting against the first bracket (410) and another end abutting against the second carrier (200), and the first elastic member (510) is in a compressed state to apply an elastic force to the first bracket (410); and
the first elastic member (510) is elastically deformed to drive the second driving member (220) to move in a direction away from the first driving member (210), when the flexible screen assembly (300) is slack.

10. The electronic device (20) of claim 9, wherein the second carrier (200) is provided with a protrusion (250), the first bracket (410) defines a through hole (411), the protrusion (250) passes through the through hole (411), the through hole (411) has a size larger than the protrusion (250), and a first movement space (412) is defined between the first bracket (410) and the protrusion (250) in a movement direction of the flexible screen assembly (300).

11. The electronic device (20) of claim 10, wherein the first movement space (412) is smaller than a maximum deformation amount of the first elastic member (510) to keep the first elastic member (510) in the compressed state.

12. The electronic device (20) of claim 10, the second carrier (200) defines an accommodating groove (260), the first bracket (410) has a straight portion (413) and a bending portion (414), the straight portion (413) is sleeved on the protrusion (250) through the through hole (411), the bending portion (414) is bendably disposed relative to the straight portion (413), the bending portion (414) is located in the accommodating groove (260), a second movement space (415) is defined between the bending portion (414) and a groove wall of the accommodating groove (260), the first elastic member (510) is accommodated in the accommodating groove (260), and the first elastic member (510) has one end abutting against the bending portion (414) and another end abutting against the groove wall of the accommodating groove (260).

13. The electronic device (20) of claim 1, wherein the first driving member (210) is disposed at one side of the second carrier (200), the second driving member (220) is disposed at another side of the second carrier (200), said another side of the second carrier (200) is disposed opposite to said one side of the second carrier (200), the first driving member (210) is movably connected with the second carrier (200) through a second bracket, and the second driving member (220) is fixedly connected with the second carrier (200), wherein the adjustment mechanism comprises a first elastic member (510), the first elastic member (510) has one end abutting against a first bracket (410) and another end abutting against the second carrier (200), the first elastic member (510) is in a compressed state to apply an elastic force to the second bracket, and when the flexible screen assembly (300) is slack, the first elastic member (510) is elastically deformed to drive the first driving member (210) to move in a direction away from the second driving member (220).

## Patentansprüche

1. Elektronische Vorrichtung (20), umfassend:
einen ersten Träger (100);
einen zweiten Träger (200), der in Bezug auf den ersten Träger (100) beweglich ist, um zu verursachen, dass die elektronische Vorrichtung (20) ausgefahren wird;
ein erstes Antriebselement (210) und ein zweites Antriebselement (220), die jeweils am zweiten Träger (200) angeordnet sind; und
eine flexible Bildschirmanordnung (300), die ein erstes Ende und ein zweites Ende aufweist, die jeweils mit dem ersten Träger (100) verbunden sind und um das erste Antriebselement (210) und das zweite Antriebselement (220) gewickelt sind, wobei ein am ersten Antriebselement (210) gelegener Teil der flexiblen Bildschirmanordnung (300) eine erste Biegung bildet und ein am zweiten Antriebselement (220) gelegener Teil der flexiblen Bildschirmanordnung (300) eine zweite Biegung bildet,
wobei die flexible Bildschirmanordnung (300) so konfiguriert ist, dass sie sich in Bezug auf das erste Antriebselement (210) und das zweite Antriebselement (220) bewegt, wenn sich der zweite Träger (200) in Bezug auf den ersten Träger (100) bewegt, und während des Ausfahrens der elektronischen Vorrichtung (20) ein Teil der flexiblen Bildschirmanordnung (300) vom ersten Ende bis zur ersten Biegung länger wird und ein Teil der flexiblen Bildschirmanordnung (300) von der zweiten Biegung zum zweiten Ende kürzer wird,
**dadurch gekennzeichnet, dass**
die elektronische Vorrichtung (20) weiter einen Anpassungsmechanismus umfasst, der so konfiguriert ist, dass er einen relativen Abstand zwischen dem ersten Antriebselement (210) und dem zweiten Antriebselement (220) fein anpasst, wenn die flexible Bildschirmanordnung (300) schlaff ist, und
wobei:
die elektronische Vorrichtung (20) weiter einen Prozessor (700) und einen Detektionsmechanismus (600) umfasst, wobei der Prozessor (700) elektrisch mit dem Detektionsmechanismus (600) bzw. dem Anpassungsmechanismus gekoppelt ist, wobei der Detektionsmechanismus (600) so konfiguriert ist, dass er einen Zustand der flexiblen Bildschirmanordnung (300) erfasst, und wobei der Prozessor (700) konfiguriert ist zum:
Steuern des Anpassungsmechanismus, um das erste Antriebselement (210) in eine Richtung vom zweiten Antriebselement (220) weg anzutreiben, und/oder
Steuern des zweiten Antriebselements (220) so, dass es sich in eine Richtung vom ersten Antriebselement (210) weg bewegt,
um den relativen Abstand zwischen dem ersten Antriebselement (210) und dem zweiten Antriebselement (220) zu vergrößern, wenn die flexible Bildschirmanordnung (300) schlaff ist.

2. Elektronische Vorrichtung (20) nach Anspruch 1, wobei der Teil der flexiblen Bildschirmanordnung (300) vom ersten Ende bis zur ersten Biegung parallel zu dem Teil der flexiblen Bildschirmanordnung (300) vom zweiten Ende zur zweiten Biegung verläuft.

3. Elektronische Vorrichtung (20) nach Anspruch 2, wobei die flexible Bildschirmanordnung (300) im Uhrzeigersinn um das erste Antriebselement (210) gewickelt ist und das erste Antriebselement (210) und das zweite Antriebselement (220) jeweils drehbar mit dem zweiten Träger (200) verbunden sind.

4. Elektronische Vorrichtung (20) nach Anspruch 1, wobei der Teil der flexiblen Bildschirmanordnung (300) vom ersten Ende zur ersten Biegung nicht parallel zu dem Teil der flexiblen Bildschirmanordnung (300) vom zweiten Ende bis zur zweiten Biegung verläuft.

5. Elektronische Vorrichtung (20) nach Anspruch 4, wobei das zweite Ende der flexiblen Bildschirmanordnung (300) über einen elastischen Mechanismus mit dem ersten Träger (100) verbunden ist und der elastische Mechanismus elastisch verformt wird, um einen Abstand zwischen dem zweiten Ende der flexiblen Bildschirmanordnung (300) und dem ersten Träger (100) anpassbar zu machen.

6. Elektronische Vorrichtung (20) nach Anspruch 1, wobei das erste Antriebselement (210) einen größeren Durchmesser als das zweite Antriebselement (220) aufweist.

7. Elektronische Vorrichtung (20) nach Anspruch 1, wobei die flexible Bildschirmanordnung (300) ein flexibles Anzeigemodul (310) und einen Antriebsriemen (320) umfasst, das flexible Anzeigemodul (310) ein Ende aufweist, das mit dem ersten Träger (100) verbunden ist, das flexible Anzeigemodul (310) um das erste Antriebselement (210) gewickelt ist, das flexible Anzeigemodul (310) ein anderes Ende aufweist, das mit einem Ende des Antriebsriemens (320) verbunden ist, ein andere Ende des Antriebsriemens (320) mit dem ersten Träger (100) verbunden ist und der Antriebsriemen (320) um das zweite Antriebselement (220) gewickelt ist.

8. Elektronische Vorrichtung (20) nach Anspruch 1, wobei die flexible Bildschirmanordnung (300) ein flexibles Anzeigemodul (310), ein Stützelement (330) und einen Antriebsriemen (320) umfasst, das flexible Anzeigemodul (310) das Stützelement (330) abdeckt, das Stützelement (330) um das erste Antriebselement (210) gewickelt ist, das Stützelement (330) ein Ende aufweist, das mit dem ersten Träger (100) verbunden ist, das Stützelement (330) ein anderes Ende aufweist, das mit einem Ende des Antriebsriemens (320) verbunden ist, ein anderes Ende des Antriebsriemens (320) mit dem ersten Träger (100) verbunden ist und der Antriebsriemen (320) um das zweite Antriebselement (220) gewickelt ist.

9. Elektronische Vorrichtung (20) nach Anspruch 1, wobei das zweite Antriebselement (220) über eine erste Halterung (410) beweglich mit dem zweiten Träger (200) verbunden ist, der Anpassungsmechanismus ein erstes elastisches Element (510) umfasst, das erste elastische Element (510) ein Ende aufweist, das an der ersten Halterung (410) anliegt, und ein anderes Ende, das am zweiten Träger (200) anliegt und sich das erste elastische Element (510) in einem komprimierten Zustand befindet, um eine elastische Kraft auf die erste Halterung (410) auszuüben; und
sich das erste elastische Element (510) elastisch verformt, um das zweite Antriebselement (220) in einer Richtung vom ersten Antriebselement (210) weg zu bewegen, wenn die flexible Bildschirmanordnung (300) schlaff ist.

10. Elektronische Vorrichtung (20) nach Anspruch 9, wobei der zweite Träger (200) mit einem Vorsprung (250) bereitgestellt ist, die erste Halterung (410) eine Durchgangsbohrung (411) definiert, der Vorsprung (250) durch die Durchgangsbohrung (411) durchgeht, die Durchgangsbohrung (411) eine Größe aufweist, die größer ist als der Vorsprung (250), und ein erster Bewegungsraum (412) zwischen der ersten Halterung (410) und dem Vorsprung (250) in einer Bewegungsrichtung der flexiblen Bildschirmanordnung (300) definiert ist.

11. Elektronische Vorrichtung (20) nach Anspruch 10, wobei der erste Bewegungsraum (412) kleiner als ein maximales Verformungsausmaß des ersten elastischen Elements (510) ist, um das erste elastische Element (510) im komprimierten Zustand zu halten.

12. Elektronische Vorrichtung (20) nach Anspruch 10, wobei der zweite Träger (200) eine Aufnahmenut (260) definiert, die erste Halterung (410), einen geraden Abschnitt (413) und einen Biegeabschnitt (414) aufweist, der gerade Abschnitt (413) durch die Durchgangsbohrung (411) auf den Vorsprung (250) aufgeschoben ist, der Biegeabschnitt (414) in Bezug auf den geraden Abschnitt (413) biegsam angeordnet ist, der Biegeabschnitt (414) in der Aufnahmenut (260) gelegen ist, ein zweiter Bewegungsraum (415) zwischen dem Biegeabschnitt (414) und einer Nutwand der Aufnahmenut (260) definiert ist, das erste elastische Element (510) in der Aufnahmenut (260) aufgenommen ist und erste elastische Element (510) ein Ende, das am Biegeabschnitt (414) anliegt, und ein anderes Ende aufweist, das an der Nutwand der Aufnahmenut (260) anliegt.

13. Elektronische Vorrichtung (20) nach Anspruch 1, wobei das erste Antriebselement (210) an einer Seite des zweiten Trägers (200) angeordnet ist, das zweite Antriebselement (220) an einer anderen Seite des zweiten Trägers (200) angeordnet ist, wobei die andere Seite des zweiten Trägers (200) gegenüber der einen Seite des zweiten Trägers (200) angeordnet ist, das erste Antriebselement (210) über eine zweite Halterung beweglich mit dem zweiten Träger (200) verbunden ist und das zweite Antriebselement (220) fest mit dem zweiten Träger (200) verbunden ist, wobei der Anpassungsmechanismus ein erstes elastisches Element (510) umfasst, wobei das erste elastische Element (510) ein Ende aufweist, das an einer ersten Halterung (410) anliegt und ein anderes Ende, das am zweiten Träger (200) anliegt, sich das erste elastische Element (510) in einem komprimierten Zustand befindet, um eine elastische Kraft auf die zweite Halterung auszuüben, und wenn die flexible Bildschirmanordnung (300) schlaff ist, das erste elastische Element (510) elastisch verformt wird, um das erste Antriebselement (210) in einer Richtung von dem zweiten Antriebselement (220) weg zu bewegen.

## Revendications

1. Dispositif électronique (20), comprenant :
un premier support (100) ;
un second support (200) mobile par rapport au premier support (100) pour permettre au dispositif électronique (20) de s'étendre ;
un premier élément d'entraînement (210) et un second élément d'entraînement (220) disposés chacun au niveau du second support (200) ; et
un ensemble écran flexible (300), présentant une première extrémité et une seconde extrémité chacune reliées au premier support (100), et enroulé autour du premier élément d'entraînement (210) et du second élément d'entraînement (220), dans lequel une partie de l'ensemble écran flexible (300) située au niveau du premier élément d'entraînement (210) forme un premier tour, et une partie de l'ensemble écran flexible (300) située au niveau du second élément d'entraînement (220) forme un second tour,
dans lequel l'ensemble écran flexible (300) est configuré pour se déplacer par rapport au premier élément d'entraînement (210) et au second élément d'entraînement (220) lorsque le second support (200) se déplace par rapport au premier support (100), et lors de l'extension du dispositif électronique (20), une partie de l'ensemble écran flexible (300) de la première extrémité au premier tour s'allonge, et une partie de l'ensemble écran flexible (300) du second tour à la seconde extrémité se raccourcit,
**caractérisé en ce que**
le dispositif électronique (20) comprend en outre un mécanisme de réglage, et le mécanisme de réglage est configuré pour ajuster finement la distance relative entre le premier élément d'entraînement (210) et le second élément d'entraînement (220) lorsque l'ensemble écran flexible (300) est lâche, et
dans lequel :
le dispositif électronique (20) comprend en outre un processeur (700) et un mécanisme de détection (600), dans lequel le processeur (700) est couplé électriquement au mécanisme de détection (600) et au mécanisme de réglage respectivement, dans lequel le mécanisme de détection (600) est configuré pour détecter un état de l'ensemble écran flexible (300), et dans lequel le processeur (700) est configuré pour :
commander le mécanisme de réglage pour entraîner le premier élément d'entraînement (210) à se déplacer dans une direction s'éloignant du second élément d'entraînement (220), et/ou
commander le second élément d'entraînement (220) à se déplacer dans une direction s'éloignant du premier élément d'entraînement (210),
pour augmenter la distance relative entre le premier élément d'entraînement (210) et le second élément d'entraînement (220) lorsque l'ensemble écran flexible (300) est lâche.

2. Dispositif électronique (20) selon la revendication 1, dans lequel la partie de l'ensemble écran flexible (300) de la première extrémité au premier tour est parallèle à la partie de l'ensemble écran flexible (300) de la seconde extrémité au second tour.

3. Dispositif électronique (20) selon la revendication 2, dans lequel l'ensemble écran flexible (300) est enroulé autour du premier élément d'entraînement (210) dans le sens horaire, et le premier élément d'entraînement (210) et le second élément d'entraînement (220) sont chacun connectés de manière rotative au second support (200).

4. Dispositif électronique (20) selon la revendication 1, dans lequel la partie de l'ensemble écran flexible (300) de la première extrémité au premier tour n'est pas parallèle à la partie de l'ensemble écran flexible (300) de la seconde extrémité au second tour.

5. Dispositif électronique (20) selon la revendication 4, dans lequel la seconde extrémité de l'ensemble écran flexible (300) est reliée au premier support (100) par un mécanisme élastique, et le mécanisme élastique est déformé élastiquement pour rendre réglable la distance entre la seconde extrémité de l'ensemble écran flexible (300) et le premier support (100).

6. Dispositif électronique (20) selon la revendication 1, dans lequel le premier élément d'entraînement (210) présente un diamètre supérieur au second élément d'entraînement (220).

7. Dispositif électronique (20) selon la revendication 1, dans lequel l'ensemble écran flexible (300) comprend un module d'affichage flexible (310) et une courroie d'entraînement (320), le module d'affichage flexible (310) présente une extrémité connectée au premier support (100), le module d'affichage flexible (310) est enroulé autour du premier élément d'entraînement (210), le module d'affichage flexible (310) présente une autre extrémité connectée à une première extrémité de la courroie d'entraînement (320), l'autre extrémité de la courroie d'entraînement (320) est connectée au premier support (100), et la courroie d'entraînement (320) est enroulée autour du second élément d'entraînement (220).

8. Dispositif électronique (20) selon la revendication 1, dans lequel l'ensemble écran flexible (300) comprend un module d'affichage flexible (310), un élément de support (330) et une courroie d'entraînement (320), le module d'affichage flexible (310) recouvre l'élément de support (330), l'élément de support (330) est enroulé autour du premier élément d'entraînement (210), l'élément de support (330) présente une extrémité connectée au premier support (100), l'élément de support (330) présente une autre extrémité connectée à une première extrémité de la courroie d'entraînement (320), l'autre extrémité de la courroie d'entraînement (320) est connectée au premier support (100), et la courroie d'entraînement (320) est enroulée autour du second élément d'entraînement (220).

9. Dispositif électronique (20) selon la revendication 1, dans lequel le second élément d'entraînement (220) est connecté de manière mobile au second support (200) par l'intermédiaire d'une première équerre (410), le mécanisme de réglage comprend un premier élément élastique (510), le premier élément élastique (510) présentant une extrémité en butée contre la première équerre (410) et une autre extrémité en butée contre le second support (200), et le premier élément élastique (510) est dans un état comprimé pour appliquer une force élastique à la première équerre (410) ; et
le premier élément élastique (510) est déformé élastiquement pour entraîner le second élément d'entraînement (220) à se déplacer dans une direction s'éloignant du premier élément d'entraînement (210), lorsque l'ensemble écran flexible (300) est lâche.

10. Dispositif électronique (20) selon la revendication 9, dans lequel le second support (200) est muni d'une protubérance (250), la première équerre (410) définit un trou traversant (411), la protubérance (250) passe à travers le trou traversant (411), le trou traversant (411) présente une taille supérieure à celle de la protubérance (250), et un premier espace de mouvement (412) est défini entre la première équerre (410) et la protubérance (250) dans une direction de mouvement de l'ensemble écran flexible (300).

11. Dispositif électronique (20) selon la revendication 10, dans lequel le premier espace de mouvement (412) est plus petit qu'une quantité de déformation maximale du premier élément élastique (510) pour maintenir le premier élément élastique (510) dans l'état comprimé.

12. Dispositif électronique (20) selon la revendication 10, le second support (200) définit une rainure de réception (260), la première équerre (410) présente une partie droite (413) et une partie coudée (414), la partie droite (413) est insérée dans la protubérance (250) à travers le trou traversant (411), la partie coudée (414) est disposée de manière flexible par rapport à la partie droite (413), la partie coudée (414) est située dans la rainure de réception (260), un second espace de mouvement (415) est défini entre la partie coudée (414) et une paroi de la rainure de réception (260), le premier élément élastique (510) est logé dans la rainure de réception (260), et le premier élément élastique (510) présente une extrémité qui vient en butée contre la partie coudée (414) et une autre extrémité qui vient en butée contre la paroi de la rainure de réception (260).

13. Dispositif électronique (20) selon la revendication 1, dans lequel le premier élément d'entraînement (210) est disposé d'un premier côté du second support (200), le second élément d'entraînement (220) est disposé de l'autre côté du second support (200), ledit autre côté du second support (200) est opposé audit premier côté du second support (200), le premier élément d'entraînement (210) est relié de manière mobile au second support (200) par l'intermédiaire d'une seconde équerre, et le second élément d'entraînement (220) est fixé au second support (200), dans lequel le mécanisme de réglage comprend un premier élément élastique (510), le premier élément élastique (510) présente une extrémité venant en butée contre une première équerre (410) et une autre extrémité venant en butée contre le second support (200), le premier élément élastique (510) est dans un état comprimé pour appliquer une force élastique sur la seconde équerre, et lorsque l'ensemble écran flexible (300) est lâche, le premier élément élastique (510) est déformé élastiquement pour entraîner le premier élément d'entraînement (210) à se déplacer dans une direction s'éloignant du second élément d'entraînement (220).
